# EUROPÄISCHE PATENTANMELDUNG

(11) **EP 2 208 954 A2**
(43) Veröffentlichungstag der Anmeldung: **21.07.2010**
(21) Anmeldenummer: 10000399.5
(22) Anmeldetag: 18.01.2010
(51) Int. Cl.: F28D 20/00, F24J 3/08

(54) **Erdkollektorvorrichtung und Montagevorrichtung und Verfahren zur Herstellung einer Erdkollektorvorrichtung**

(30) Priorität: 20.01.2009 DE 102009005540
(71) Anmelder: Techconcept GbR, 96271 Grub (DE)
(72) Erfinder: Karsch, Hans-Ulrich, 96271 Grub am Forst (DE); Steinhäuser, Harry, 96191 Viereth-Trunstadt (DE)
(74) Vertreter: Müller, Wolf-Christian

(57) **Zusammenfassung**

Verfahren und Montagevorrichtung für eine Erdkollektorvorrichtung für eine Wärmepumpe
- mit einem Träger (200) und
- mit einem flexiblen Rohr (100), das als durchgehende Schlaufe verlegt und auf dem Träger (200) befestigt ist,
- bei der der Träger (200) Befestigungsstellen (250) zum Klemmen des Rohres (100) aufweist, wobei das Rohr (100) in den Befestigungsstellen (250) des Trägers (200) in axialer Richtung (Ra) durch Kraftschluss fixiert ist.

## Beschreibung

Die vorliegende Erfindung betrifft eine Erdkollektorvorrichtung, sowie eine Montagevorrichtung und ein Verfahren zur Herstellung einer Erdkollektorvorrlchtung.

Um Erdwärmepumpen nutzen zu können, werden Kollektoren eingesetzt, die eine im Erdreich verlegte Leitung für einen Wärmeträger aufweisen. Über den Wärmeträger wird dem Erdreich Wärme entzogen und kann der Wärmepumpe zugeführt werden.

Erdkollektoren sind in verschiedenen Bauformen bekannt. Aus der DE 3114262 A1 ist ein Erdkollektor mit sternstrahlenförmig verlegten Erdsonden bekannt, die eine Länge von 12m bis 50m aufweisen und tief in das Erdreich eingebracht werden. Weiterhin sind flächige Erdkollektoren zu horizontalen oder vertikalen Errichtung bekannt, bei denen die Kollektorleitung innerhalb einer Kollektorfläche verlegt ist. Aus der AT 378 260 ist ein Erdkollektor mit biegsamen Kunststoffrohren bekannt, der vertikal stehend in einem Graben verlegt wird. In der DE 20 2006 019 426 U1 ist ebenfalls ein Erdkollektormodul mit einem als durchgehende Schlaufe verlegtem Kunststoffrohr offenbart, der auf einem Träger montiert in einen gefrästen Schlitz eingebracht wird.

Der Erfindung liegt die Aufgabe zu Grunde eine möglichst einfach herzustellende Erdkollektorvorrichtung anzugeben.

Diese Aufgabe wird durch eine Erdkollektorvorrichtung mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist eine Erdkollektorvorrichtung für eine Wärmepumpe vorgesehen, die vorzugsweise flächig ausgebildet ist. Vorzugsweise weist die Erdkollektorvorrichtung eine im Verhältnis zur Höhe (H) und Länge (L) kleinere Breite (B) auf.

Die Erdkollektorvorrichtung weist einen Träger auf, der vorzugsweise flächig und besonders bevorzugt formstabil ausgebildet ist. Vorzugsweise erstreckt sich der Träger über die Höhe (H) der Erdkollektorvorrichtung.

Die Erdkollektorvorrichtung weist ein flexibles Rohr auf, das als durchgehende Schlaufe verlegt und an mehreren Stellen auf dem Träger befestigt ist. Unter einer durchgehenden Schlaufe wird dabei verstanden, dass diese keine Abzweigung, Verteiler oder dergleichen aufweist. Das als durchgehende Schlaufe auf dem Träger positionierte Rohr kann daher auch als Rohrschlange bezeichnet werden. Das Rohr kann für den Energietransport zur Wärmepumpe mit einem beispielsweise flüssigen Wärmeträger gefüllt werden. Vorzugsweise ist das Rohr ein flexibles Kunststoffrohr.

Der Träger weist Befestigungsstellen zum Klemmen des Rohres auf. Das Rohr ist in den Befestigungsstellen des Trägers in axialer Richtung durch Kraftschluss fixiert. Bevorzugt ist das Rohr in den Befestigungsstellen auch in radialer Richtung, insbesondere durch Formschluss fixiert. Die Klemmung bewirkt, dass das Rohr in den Befestigungsstellen in axialer Richtung verrutschsicher ist. Vorzugsweise wird mittels der Klemmung des Rohres in den Befestigungsstellen eine Formstabilität der gesamten Erdkollektorvorrichtung bewirkt.

Der Erfindung liegt weiterhin die Aufgabe zu Grunde ein möglichst verbessertes Verfahren zur Herstellung einer Erdkollektorvorrichtung anzugeben.

Diese Aufgabe wird durch das Verfahren mit den Merkmalen des unabhängigen Anspruchs 9 gelöst. Vorteilhafte Weiterbildungen sind Gegenstand von abhängigen Ansprüchen und in der Beschreibung enthalten.

Demzufolge ist ein Verfahren zur Herstellung einer Erdkollektorvorrichtung vorgesehen.

In dem Verfahren wird eine Platte eines Trägers in einer Montagevorrichtung eingebracht.

Vorzugsweise nach dem Einbringen der Platte in die Montagevorrichtung wird ein flexibles Rohr entlang eines Weges auf der Montagevorrichtung verlegt und damit positioniert. Vorzugsweise ist das Rohr ein flexibles Kunststoffrohr.

Mittels Befestigungselementen oder einer weiteren Platte wird das Rohr derart geklemmt, dass das Rohr in Befestigungsstellen in axialer Richtung durch Kraftschluss fixiert ist.

Vorzugsweise nach der Fixierung des Rohres wird die Erdkollektorvorrichtung der Montagevorrichtung für eine Errichtung im Erdreich entnommen.

Der Erfindung liegt weiterhin die Aufgabe zu Grunde, eine Montagevorrichtung zur Herstellung einer Erdkollektorvorrichtung anzugeben.

Diese Aufgabe wird durch eine Montagevorrichtung mit den Merkmalen des unabhängigen Anspruchs 10 gelöst. Vorteilhafte Weiterbildungen sind Gegenstand von abhängigen Ansprüchen und in der Beschreibung angegeben.

Demzufolge ist eine Montagevorrichtung zur Herstellung einer Erdkollektorvorrichtung vorgesehen.

Die Montagevorrichtung weist eine Grundplatte auf, die Ausnehmungen für eine Aufnahme von Platten eines Trägers der Erdkollektorvorrichtung aufweist.

Die Montagevorrichtung weist weiterhin eine Anzahl von Positionierelementen auf, die zur Festlegung eines Verlegungsweges für ein Rohr der Erdkollektorvorrichtung auf der Grundplatte positioniert und befestigt sind. Alternativ sind die Positionierelemente mit der Grundplatte einstückig ausgeformt. Beispielsweise ist eine Anzahl Rillen als Verlegungsweg in der Grundplatte - insbesondere durch Fräsen - ausgebildet. Die Wandungen der zumindest einen Rille bilden dabei die Positionierelemente, die mit der Grundplatte einstückig ausgeformt sind.

Die im Folgenden beschriebenen Weiterbildungen beziehen sich auf die Erdkollektorvorrichtung und ggf. analog auf das Verfahren zur Herstellung und auf die Montagevorrichtung.

Gemäß einer bevorzugten Weiterbildung ist vorgesehen, dass der Träger für die Befestigungsstellen Nuten zur Aufnahme des Kunststoffrohres aufweist. Bevorzugt ist das Kunststoffrohr in den Nuten des Trägers geklemmt. Besonders bevorzugt weist zumindest eine Abmessung der Nuten gegenüber einem Außendurchmesser des Kunststoffrohres ein Untermaß auf. Vorzugsweise sind die Nuten halbzylindrisch ausgeformt. Gemäß einer vorteilhaften Weiterbildungsvariante ist der Träger mehrtellig ausgebildet. Der Träger weist vorzugsweise mehrere voneinander beabstandete Trägerelemente auf. Vorzugsweise ist die Summe der Flächen der Trägerelemente signifikant kleiner die Gesamtfläche der Erdkollektorvorrichtung. Hierbei wird unmittelbar nach der Errichtung der Erdkollektorvorrichtung eine gute Wärmekopplung zum beidseitig an das Kunststoffrohr angrenzenden Erdreich erzielt.

Um eine einfache Herstellung der Trägerelemente zu gewährleisten sind Trägerelemente des Trägers in einer vorteilhaften Ausgestaltung als Gleichteile ausgebildet. Vorzugsweise weist jedes Trägerelement Nuten auf, die speziell für einen Außenbereich/Randbereich und/oder speziell für einen Innenbereich/Mittenbereich der Erdkollektorvorrichtung zur Verlegung des Kunststoffrohres ausgebildet sind und entsprechend der Position des Trägerelements innerhalb der Fläche der Erdkollektorvorrichtung verwendet werden. Bevorzugt ist vorgesehen, dass die Nuten im Außenbereich des Trägerelements zu einer Symmetrieachse in der Mitte des Trägerelementes spiegelbildlich angeordnet sind. Besonders bevorzugt nimmt im Außenbereich des Trägerelements ein Abstand zwischen den vorteilhafterweise parallel angeordneten Nuten in Richtung der Mitte des Trägerelements ab. Besonders bevorzugt weist das Trägerelement im Innenbereich eine Überzahl von Nuten auf, so dass ein Teil der Nuten nicht durch das Kunststoffrohr belegt sind. Durch die Überzahl der Nuten im Innenbereich können mehrere Trägerelemente des Trägers als Gleichteile ausgebildet werden, wobei die Belegung der Nuten des jeweiligen Trägerelementes von der Position des Trägerelementes innerhalb der Erdkollektorvorrichtung abhängt.

In einer ersten Ausgestaltungsvariante ist vorteilhafterweise vorgesehen, dass der Träger Befestigungselemente aufweist, die zum Klemmen des Kunststoffrohres auf einer Platte des Trägers befestigt sind. Die Befestigungselemente sind beispielsweise U-förmige Elemente zur Aufnahme des Kunststoffrohres.

In einer zweiten Ausgestaltungsvariante ist vorteilhafterweise vorgesehen, dass der Träger zwei Platten aufweist, wobei zwischen den zwei Platten das Kunststoffrohr durch die Klemmung fixiert ist. Bevorzugt sind die zwei Platten durch ein Befestigungsmittel, wie einen Dübel oder eine Schrauben aneinander befestigt. Vorzugsweise grenzen die Platten im befestigten Zustand aneinander, so dass zwischen den Platten der Hohlraum minimiert wird. Bevorzugt weist jeder der zwei Platten zueinander positionierte Nuten auf. Vorzugsweise sind die Nuten in jeder der zwei Platten halbzylindrisch ausgebildet, so dass die zueinander positionierten Nuten eine Zylinderform bilden. Vorzugsweise weist ein Innendurchmesser der Zylinderform ein Untermaß gegenüber dem Außendurchmesser des Kunststoffrohres auf.

In einer anderen Weiterbildung ist vorgesehen, dass der Träger überwiegend aus Holz ausgebildet ist. Vorzugsweise sind die Nuten in das Holz des Trägers gefräst. Der Träger ist in einer anderen vorteilhaften Ausgestaltungsvariante aus einem grundwasserneutralen Material, insbesondere aus Kunststoff ausgebildet.

Der Träger ist lediglich für die Errichtung der Erdkollektorvorrichtung notwendig. Nach der Fixierung der Position des Kunststoffrohres durch das Erdreich wird der Träger nicht mehr benötigt. Bevorzugt ist der Träger daher ausgebildet im Erdreich die Klemmung des Kunststoffrohres durch den Träger zu lösen. Vorzugsweise bewirkt das Lösen der Klemmung das Material des Trägers selbst. Vorzugsweise verändern sich mechanische Eigenschaften des Materials des Trägers nach eine Mindestzeitspanne, beispielsweise von mindestens vier Wochen, nach der Errichtung der Erdkollektorvorrichtung im Erdreich. Vorzugsweise weist der Träger daher überwiegend Material auf, das im Erdreich auflösbar, insbesondere wie Holz verrottbar ist. Bevorzugt wird der Träger vollständig im Erdreich aufgelöst. Besonders bevorzugt weist die Erdkollektorvorrichtung Holz als Material auf, das idealerweise vollständig im Erdreich auflösbar ist. Das Material des Trägers wird beispielsweise durch Mikroorganismen oder dergleichen zersetzt.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen
- Fig. 1a bis 1d,: Ansichten eines ersten Ausführungsbeispiels einer Erdkollektorvorrichtung,
- Figuren 2a und 2b,: Ansichten einer Montagevorrichtung,
- Figuren 3a bis 3c,: Ansichten eines zweiten Ausführungsbeispiels einer Erdkollektorvorrichtung, und
- Figuren 4a bis 4c,: Ansichten von Trägerelementen einer Erdkollektorvorrichtung eines dritten Ausführungsbeispiels.

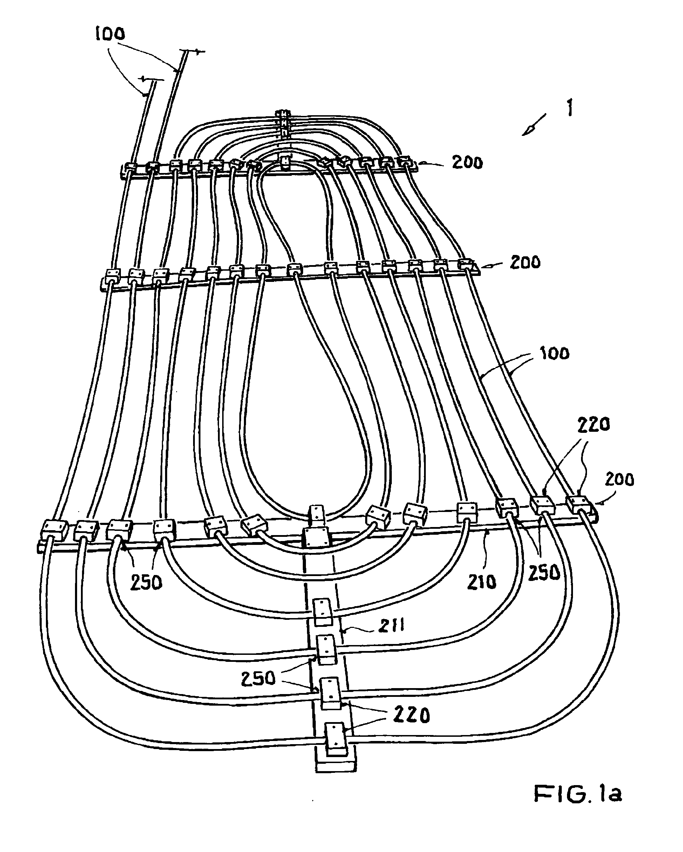

In den Figuren 1a bis 1d sind Ansichten eines ersten Ausführungsbeispiels einer Erdkollektorvorrichtung 1 schematisch dargestellt. Die Erdkollektorvorrichtung 1 Ist für eine Wärmepumpe eines Gebäudes (nicht dargestellt) geeignet. Die Erdkollektorvorrichtung 1 wird dabei vorzugsweise in vertikaler Anordnung im Erdreich errichtet. Hierzu wird beispielsweise ein Graben ausgehoben oder ein Schlitz Ins Erdreich gefräst und die Erdkollektorvorrichtung 1 in den Graben oder Schlitz eingebracht.

Die Erdkollektorvorrichtung 1 weist einen Träger 200 mit mehreren voneinander beabstandeten Trägerelementen auf. Die Trägerelemente sind dabei nicht untereinander verbunden. Die Trägerelemente des Trägers 200 sind dabei formstabil, beispielsweise aus Fichtenholz, ausgebildet. Die Erdkollektorvorrichtung erhält ihre Festigkeit dabei aus der Befestigung des Kunststoffrohres 100 auf den Trägerelementen des Trägers 200.

Das Kunststoffrohr 100 ist als durchgehende Schlaufe verlegt und auf dem Träger 200 befestigt. Mittels der Befestigungsstellen 250 des Trägers 200 sind Abschnitte des flexiblen Kunststoffrohres 100 zueinander auf Distanz gehalten, so dass die Wärmekopplung im Erdreich verbessert werden kann. Die Befestigung des Kunststoffrohres 100 auf dem Träger 200 bewirkt die Beibehaltung der geometrischen Form der Rohrverlegung, wie beispielsweise eine Spirale oder dergleichen. Unter Beibehaltung der Form der Rohrverlegung werden auch geringe Abweichungen innerhalb eines Toleranzbereichs verstanden, die jedoch eine Berührung von Abschnitten des flexiblen Kunststoffrohres 100 aneinander nicht zulassen. Das Kunststoffrohr 100 ist vorzugsweise hochdruckvernetzt. Das Kunststoffohr 100 ist vorzugsweise auf dem Träger 200 kreuzungsfrei verlegt. Beispielsweise ist das Kunststoffrohr 100 auf dem Träger 200 mäanderförmig oder spiralförmig verlegt.

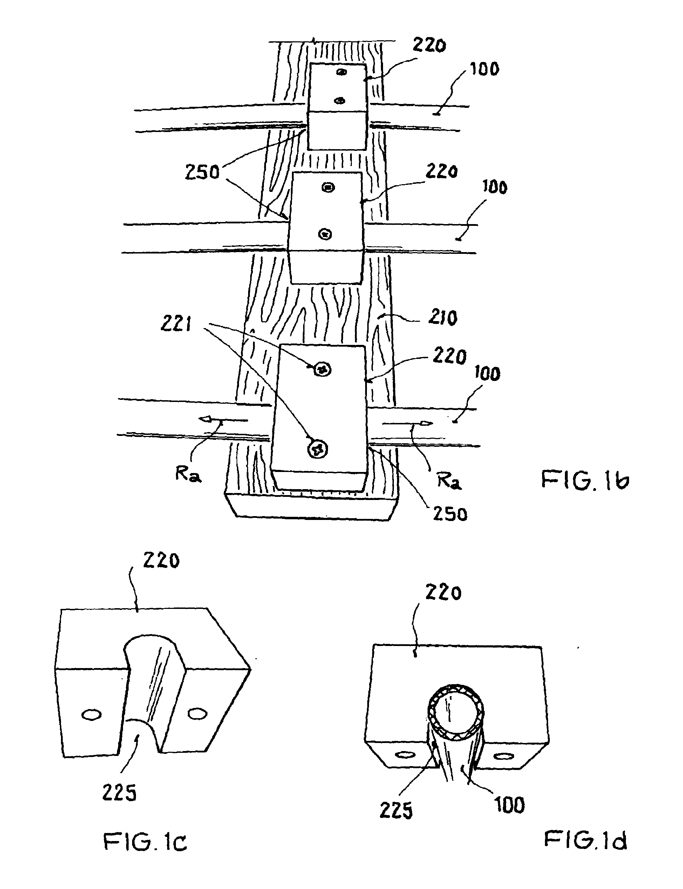

Der Träger 200 weist in den Befestigungsstellen 250 Nuten 225 zur Aufnahme des Kunststoffrohres 100 auf. Im Ausführungsbeispiel der Fig. 1 sind die Befestigungsstellen 250 durch Befestigungselemente 220 gebildet, die auf Holzplatten 210, 211 des Trägers 200 befestigt sind. Als Holzplatten können Standardpaneele aus Fichtenholz verwendet werden.

Ein Beispiel für ein Befestigungselement 220 ist in den Figuren 1c und 1d dargestellt. Das Befestigungselement 220 ist ein Holzquader in den eine Nut 225 gefräst ist. Diese Nut 225 ist beispielsweise rechteckig ausgeformt oder alternativ durch eine entsprechende Rundung an die Form des Kunststoffrohres 100 angepasst. Ein Befestigungselement 220 mit in die Nut 225 eingebrachtem Kunststoffrohr 100 ist in Fig. 1d dargestellt.

Das Kunststoffrohr 100 ist - wie in Fig. 1b dargestellt - in den Nuten 225 zur Fixierung in axialer Richtung Ra geklemmt. Die Klemmung in den Nuten 225 bewirkt einen Kraftschluss der ein Verrutschen in axialer Richtung Ra verhindert. Das Kunststoffrohr 100 ist in den Nuten 225 In axialer Richtung Ra daher verrutschsicher fixiert. Die Klemmung des Kunststoffrohres 100 in der Nut 225 kann dabei durch beide Seitenwände der Nut 225 erfolgen, wenn die Nut 225 eine kleinere Breite als der Durchmesser des Kunststoffrohres 100 aufweist. Dabei wird zur Klemmung das Kunststoffrohr 100 unter Kraftaufwand in die Nut 225 eingepresst.

Alternativ oder in Kombination kann die Klemmkraft zwischen dem Boden der Nut 225 und einer Platte 210, 211 wirken. Hierzu weist die Nut 225 im Befestigungselement 220 eine geringere Tiefe auf als der Durchmesser des Kunststoffrohres 100. Wird das Befestigungselement 220, beispielsweise mittels Schrauben 221 - wie in Fig. 1b dargestellt - auf der Platte 210 des Trägers 200 befestigt, wirkt die Befestigungskraft als Klemmkraft ebenfalls auf das Kunststoffrohr 100 und fixiert das Kunststoffrohr 100 in axialer Richtung Ra verrutschsicher.

Da das Kunststoffrohr 100 in allen Befestigungspunkten 250 In axialer Richtung Ra durch Kraftschluss verrutschsicher fixiert ist, erhält die Erdkollektorvorrichtung ihre Stabilität somit vorteilhafterweise durch die Klemmung und auch durch die Vielzahl der Abschnitte des Kunststoffrohres 100 selbst, so dass die Erdkollektorvorrichtung 1 auf einer Baustelle zur Errichtung einfach gehandhabt werden kann. Vorteilhaft ist dabei auch der geringe Anteil der Fläche des Trägers 200 an der Gesamtfläche der Erdkollektorvorrichtung 1, der bereits kurz nach der Errichtung eine gute Wärmekopplung zum Erdreich ermöglicht. Ebenfalls wird der Vorteil erzielt, dass die Erdkollektorvorrichtung auch bei größeren Windstärken auf der Baustelle noch handhabbar ist.

An den Stirnseiten der Erdkollektorvorrichtung 1 ist eine Holzplatte 211 nach Art eines rechten Winkels zu einer anderen Holzplatte 210 positioniert und optional an der anderen Holzplatte 210 befestigt um die Steifigkeit der Erdkollektorvorrichtung 1 zu erhöhen.

Ein Endbereich des flexiblen Kunststoffrohres 100 ist in einer Vormontageposltion an einem anderen Abschnitt des flexiblen Kunststoffrohres 100 oder an dem Träger 200 lösbar befestigt. Zur lösbaren Befestigung können beispielsweise mittels einer Schneidzange durchtrennbare Kabelbinder verwendet werden. Alternativ ist der Endbereich durch Klemmung am Träger lösbar befestigt.

Die Erdkollektorvorrichtung 1 ist vorzugsweise als Modul ausgebildet, wobei ein Modul eine vorgefertigte Baueinheit ist, die als Einheit an die Baustelle zur Errichtung angeliefert werden kann. Die Erdkollektorvorrichtung 1 kann für eine bezüglich der Erdoberfläche horizontale Errichtung ausgebildet sein. Bevorzugt ist die Erdkollektorvorrichtung 1 jedoch für eine bezüglich der Erdoberfläche vertikale Errichtung ausgebildet. Eine ebene Form der Erdkollektorvorrichtung 1 bewirkt eine im Vergleich zur Länge L und Tiefe/Höhe H wesentlich kleinere Breite B der Erdkollektorvorrichtung. Eine Planarität der Erdkollektorvorrichtung 1 ist hingegen nicht erforderlich. Die Breite der Erdkollektorvorrichtung 1 sollte möglichst klein ausgebildet werden um eine Breite eines zugehörigen Schlitzes im Erdreich entsprechend klein ausbilden zu können, in den die Erdkollektorvorrichtung 1 zur Errichtung eingebracht wird.

Die Modularität ermöglicht es, je nach Umgebungsbedingungen, wie Bodenbeschaffenheit, Abmessungen etc. die Abmessungen der Erdkollektorvorrichtung anzupassen. Der Träger 200 ist vorzugsweise formstabil, bevorzugt starr ausgebildet.

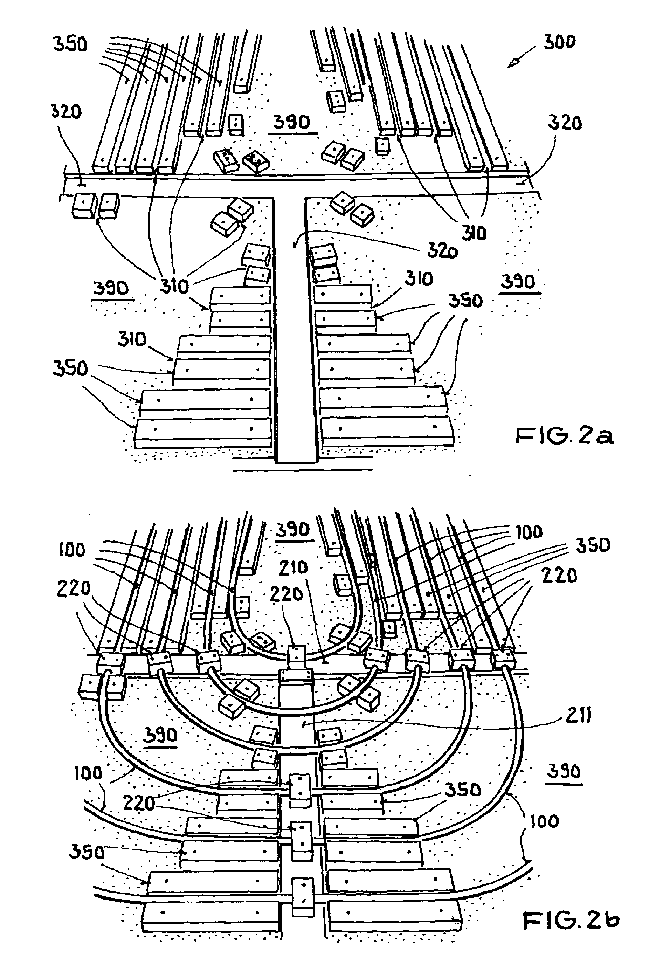

Die Figuren 2a und 2b zeigen Ansichten einer Montagevorrichtung 300 zur Herstellung einer Erdkollektorvorrlchtung 1. Die Montagevorrichtung 300 weist eine Grundplatte 390, beispielsweise aus Holz auf. Auf der Grundplatte 390 sind Positionierungselemente 350 angeordnet und befestigt. Zwischenräume zwischen den Positionierungselementen 350 bilden einen Weg 310 zur Verlegung und Positionierung für ein Kunststoffrohr 100. Ein in dem Verlegungsweg 310 verlegtes Kunststoffrohr 100 ist in Fig. 2b schematisch dargestellt.

In Fig. 2a sind Ausnehmungen 320 in der Grundplatte 390 dargestellt. In die Ausnehmungen werden Platten 210, 211 eines Trägers 200 der Erdkollektorvorrichtung 1 - gemäß Fig. 2b - positioniert. Nach dem Positionieren der Platten 210, 211 des Trägers 200 wird das Kunststoffrohr 100 positioniert. Das flexible Kunststoffrohr 100 wird entlang des Weges 310 auf der Montagevorrichtung 300 positioniert.

In Fig. 2b ist dargestellt, wie durch Befestigungselemente 220 das Kunststoffrohr 100 zwischen jeweils einem Befestigungselement 220 und einer Platte 210, 211 geklemmt wird. Es wird dabei eine derartige Klemmkraft aufgebracht, dass das Kunststoffrohr 100 in den Befestigungsstellen in axialer Richtung durch Kraftschluss verrutschsicher fixiert ist. Nach der Befestigung aller Befestigungselemente auf den Platten 210, 211 wird die Erdkollektorvorrichtung 1 aus der Montagevorrichtung 300 für eine Errichtung im Erdreich entnommen.

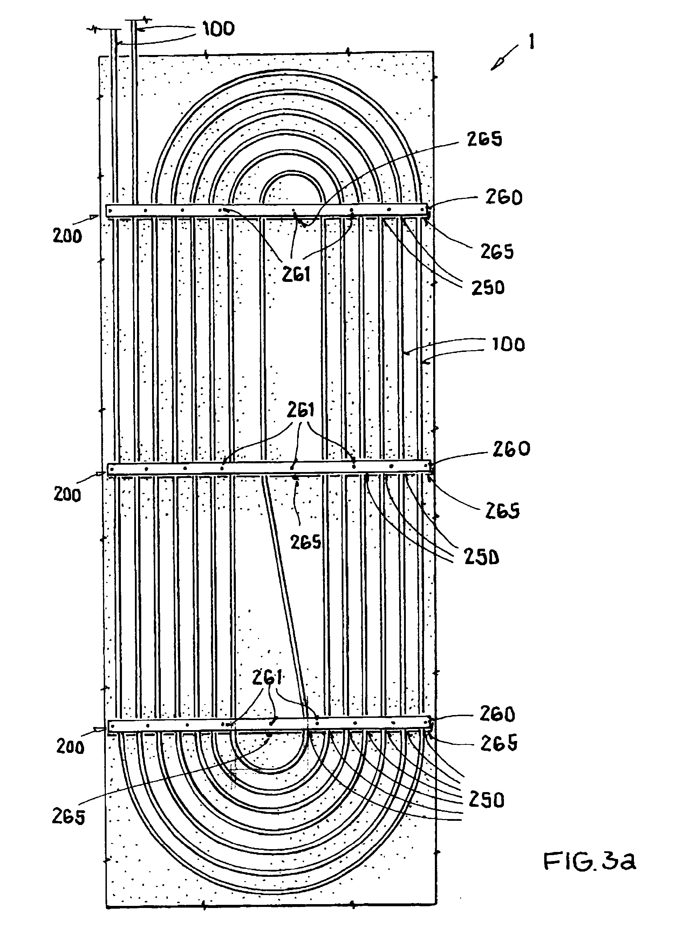

In den Figuren 3a bis 3c sind Ansichten eines bevorzugten Ausführungsbeispiels einer Erdkollektorvorrichtung 1 dargestellt. Eine Erdkollektorvorrichtung 1 weist wiederum ein Kunststoffrohr 100 auf, das über eine Fläche verlegt und durch Holzplatten 260 eines Trägers 200 In seiner Position fixiert ist. Dabei ist wichtig, dass die Abschnitte des Kunststoffrohres 100 zueinander einen Mindestabstand beibehalten, so dass nach der Errichtung im Erdreich eine gute Wärmekopplung erzielt werden kann. Eine Länge der Holzplatten 260 des Trägers 200 bildet die Höhe H der Erdkollektorvorrichtung 1. Hingegen definieren die Rundungen des Kunststoffrohres 100 an den Stirnseiten der Erdkollektorvorrichtung 1 die Länge L der Erdkollektorvorrichtung. Zusätzlich kann das Kunststoffrohr 100 in den Rundungen durch ein weiteres Trägerelement (in Fig. 3a nicht dargestellt) durch Klemmung fixiert sein. Dabei ist es nicht zwingend erforderlich, dass das weitere Trägerelement an einem der Trägerelemente 260 befestigt ist.

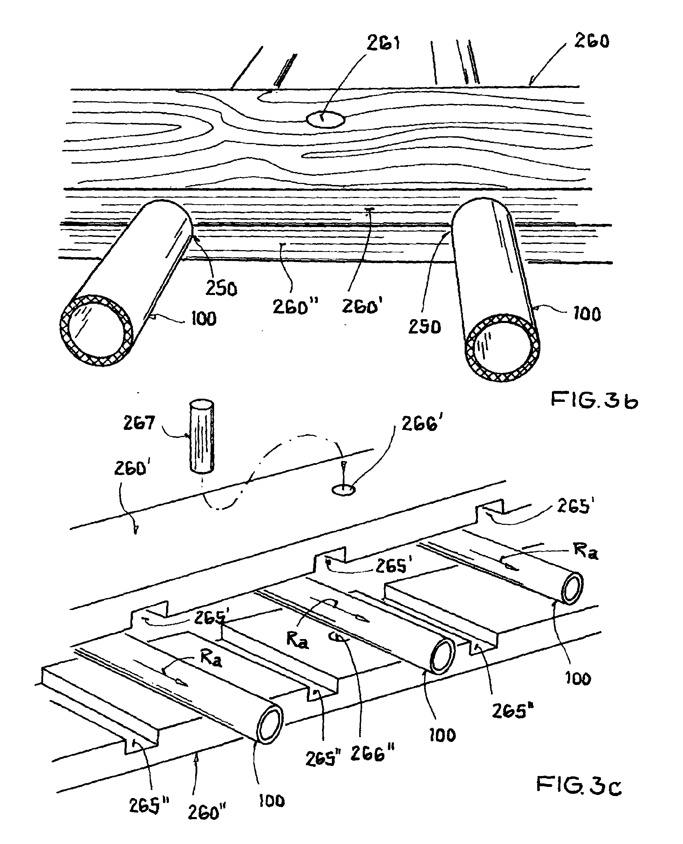

Um den Abstand der Abschnitte des Kunststoffrohres 100 zu definieren weist jede der Holzplatten 260 des Trägers 200 Öffnungen 265 auf, wobei das Kunststoffrohr 100 in Befestigungsstellen 250 innerhalb der Öffnungen 265 angeordnet ist. Wie in Fig. 3b dargestellt, weist jede Holzplatte 260 zwei Tellplatten 260' und 260" auf, zwischen die in den Befestigungsstellen 250 Abschnitte des Kunststoffrohres 100 angeordnet sind. Die Summe der Dicke der beiden Holzplatten 260' und 260" bildet die Breite B der Erdkollektorvorrichtung 1. Vorzugsweise ist zur Ausbildung der Öffnung 265 zumindest In einer der Teilplatten 260', 260" vorzugsweise jedoch in beiden Teilplatten 260' und 260" zueinander positioniert eine Nut 265 eingefräst. Die Nut 265 als Öffnung weist dabei ein Untermaß beispielsweise einen kleineren Durchmesser auf als der Durchmesser des Kunststoffrohres 100.

Mit der Befestigung der Teilplatten 260' und 260" aneinander mittels des Befestigungsmittels 261 - beispielsweise einem Dübel oder einer Schraube - ist das Kunststoffrohr 100 innerhalb der Nut 265 geklemmt. Die Klemmkraft ist dabei derart hoch, dass das Kunststoffrohr 100 in axialer Richtung Ra nicht verschoben werden kann. Somit ist das Kunststoffrohr 100 innerhalb der Holzplatten 260 in axialer Richtung Ra rutschfest fixiert. Die Erdkollektorvorrichtung 1 erhält durch die Klemmung und die Vielzahl der Abschnitte des Kunststoffrohres 100 seine für die Handhabbarkeit notwendige Festigkeit.

Fig. 3c zeigt ein Ausführungsbeispiel in einer schematischen dreidimensionalen Teil-Explosionsdarstellung. In der oberen Teilplatte 260' sind die Nuten 265' eingefräst, die zu Nuten 265" in der unteren Teilplatte 260" positioniert sind. Die Summe der Tiefen der beiden Nuten 265' und 265" ist dabei kleiner als der Außen-Durchmesser des Kunststoffrohres 100. Mittels eines Dübels 267 und entsprechenden Öffnungen 266' und 266" kleineren Querschnitts in der oberen und unteren Teilplatte 260' bzw. 260" können die Teilplatten 260' und 260" mit den dazwischen angeordneten Abschnitten des Kunststoffrohres 100 aneinander fixiert werden.

Das Ausführungsbeispiel der Figuren 3a bis 3c kann besonders einfach hergestellt werden. Ebenso ist besonders vorteilhaft eine maschinelle Fertigung möglich.

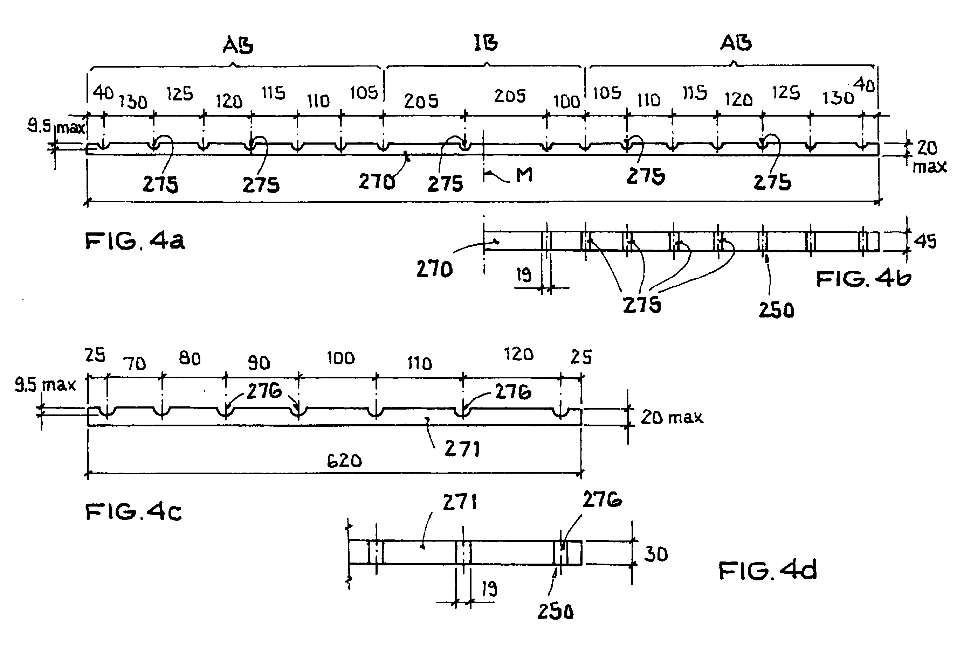

In den Figuren 4a bis 4d sind Ansichten von Holzplatten 270, 271 als Trägerelemente dargestellt. Die Holzplatte 270 in Fig. 4a weist eine Anzahl von halbzylindrischen Nuten 275 auf, die auf einer Seite in die Holzplatte gefräst sind. Die Nuten 275 können alternativ auch mit rechteckigem Querschnitt aus der Holzplatte 270 ausgefräst werden. Die Nuten 275 weisen als Befestigungsstellen 250 im Ausführungsbeispiel der Fig. 4a für ein Kunststoffrohr mit 20 mm Außendurchmesser ein Untermaß mit einem Radius von 9,5 mm auf. Im Ausführungsbeispiel der Fig. 4a weist die Holzplatte 270 eine Länge von 2000 mm auf, die die Höhe H der Erdkollektorvorrichtung definiert. Um das Kunststoffrohr in den Nuten 275 zu klemmen ist eine zweite - In Fig. 4a nicht dargestellte - Holzplatte vorgesehen, deren Nuten in der gleichen Position In Längserstreckung gefräst sind. Beide Holzplatten 270 können also als Gleichteile hergestellt werden, was den logistischen Aufwand bei der Herstellung der Erdkollektorvorrichtung 1 reduziert. Die Summe der Dicke von jeweils 20 mm der beiden Holzplatten 270 definiert die Breite B der Erdkollektorvorrlchtung 1.

Im Ausführungsbeispiel der Fig. 4a weist jedes Trägerelement Nuten 275 auf, die speziell für einen Außenbereich AB und/oder speziell für einen Innenbereich IB zur Verlegung des Kunststoffrohres 100 der Erdkollektorvorrichtung 1 ausgebildet und in der Holzplatte 270 positioniert sind. Der Außenbereich AB kann auch als Randbereich und der Innenbereich IB kann auch als Mittenbereich bezeichnet werden. Das Kunststoffrohr 100 ist dabei in einer Fläche der Erdkollektorvorrichtung 1 verlegt, wobei die Nuten 275 hierzu positioniert sind.

Im Ausführungsbeispiel der Fig. 4a ist vorgesehen, dass die Nuten 275 im Außenbereich AB zu einer Symmetrieachse M in der Mitte der Holzplatte 270, also zur Mitte des Trägerelementes 200 spiegelbildlich angeordnet sind. Besonders bevorzugt nimmt im Außenbereich AB ein Abstand zwischen den Nuten 275 in Richtung der Mitte M ab. Im Ausführungsbeispiel der Fig. 4a sind in die Holzplatte 270 im Innenbereich IB eine Überzahl von Nuten 275 eingefräst, so dass ein Teil der Nuten 275 nicht durch das Kunststoffrohr 100 belegt werden. Durch die Überzahl der Nuten 275 im Innenbereich IB können mehrere Trägerelemente 200 als Gleichteile ausgebildet werden, wobei die Belegung der Nuten 275 im Innenbereich IB des jeweiligen Trägerelementes 200 von der Position des Trägerelementes 200 Innerhalb der Erdkollektorvorrichtung 1 abhängt.

Fig. 4b zeigt eine Draufsicht auf die Holzplatte 270 der Fig. 4a. Die Nuten 275 sind in paralleler Ausrichtung in die Holzplatte 270 gefräst. Die Breite der Holzplatte 270 beträgt im Ausführungsbeispiel der Figuren 4a und 4b 45 mm.

Das Kunststoffrohr 100 ist in den Ausführungsbeispielen der Figuren 3a, 3b und 4a, 4b nach Art einer Fermatschen Spirale verlegt, wobei die Spiralaußenform durch eine ovalen Außenform der Erdkollektorvorrichtung 1 definiert ist. Jedoch nimmt der Abstand des Kunststoffrohres 100 im Außenbereich AB nach außen hin zu. Der geringere Abstand in Richtung der Mitte M der Erdkollektorvorrichtung 1 wirkt der weniger Dichten Anordnung des Kunststoffrohres 100 aufgrund des minimalen Biegeradius und der Umkehrung der Richtung der Spirale im Innenbereich IB der Erdkollektorvorrichtung 1 entgegen, so dass über die gesamte Fläche der Erdkollektorvorrichtung 1 eine gleichmäßigere Wärmekopplung zum beidseitigen Erdreich hin erzielt wird.

Sollen die Bögen des Kunststoffrohres 100 an den Stirnseiten der Erdkollektorvorrichtung 1 zusätzlich abgestützt werden, um eine weitere Versteifung der Erdkollektorvorrichtung 1 im Bereich der Bögen zu erzielen, werden im Bereich der Bögen zusätzlich Holzplatten 271 gemäß den Figuren 4c und 4d verwendet. Auch bei diesen Holzplatten nimmt der Abstand der Nuten 276 von Außen in Richtung der Mitte der Erdkollektorvorrichtung 1 ab.

Die Erfindung ist nicht auf die dargestellten Ausgestaltungsvarianten der Figuren 1a bis 4d beschränkt. Beispielsweise ist es möglich eine andere Verlegungsform des Rohres zu wählen. Ebenfalls kann ein Rohr mit einem anderen Rohraußendurchmesser bevorzugt zwischen 10 mm und 60 mm verwendet werden. Alternativ zu einem Kunststoffrohr kann auch ein Rohr aus einem anderen, sich im Erdreich nicht auflösenden Material, wie beispielsweise unbeschichtetes oder beschichtetes Metall verwendet werden. Auch ist es möglich andere Nutenformen, beispielsweise Bögen oder dergleichen oder eine andere Ausrichtung der Nuten zueinander vorzusehen um die Steifigkeit der Erdkollektorvorrichtung weiter zu erhöhen.

### Bezugszeichenliste

- 1: Erdkollektormodul
- 100: Kunststoffrohr
- 200: Träger
- 210, 211, 260, 260',: Platte, Holzlatte
- 260", 270, 271:
- 220: Befestigungselement
- 221: Schraubpunkt
- 225, 265, 265', 265",: Nut
- 275, 276:
- 250: Befestigungsstelle, Fixierung
- 261, 267: Befestigungsmittel, Schraube, Dübel
- 266', 266": Öffnung
- 300: Montagevorrichtung
- 310: Aufnahme für Kunststoffrohr
- 320: Aufnahme für Trägerelemente
- 350: Positionierelement
- 390: Grundplatte
- Ra: axiale Richtung
- IB: Innenbereich
- AB: Außenbereich
- M: Symmetrieachse, Mitte

## Patentansprüche

1. Erdkollektorvorrichtung (1) für eine Wärmepumpe
- mit einem Träger (200) und
- mit einem flexiblen Rohr (100), das als durchgehende Schlaufe verlegt und auf dem Träger (200) befestigt ist,
- bei der der Träger (200) Befestigungsstellen (250) zum Klemmen des Rohres (100) aufweist, wobei das Rohr (100) in den Befestigungsstellen (250) des Trägers (200) in axialer Richtung (Ra) durch Kraftschluss fixiert ist.

2. Erdkollektorvorrichtung (1) nach Anspruch 1,
- bei der der Träger (200) für die Befestigungsstellen (250) Nuten (225, 265, 265', 265") zur Aufnahme des Rohres (100) aufweist, wobei das Rohr (100) in den Nuten (225, 265, 265', 265") geklemmt ist.

3. Erdkollektorvorrichtung (1) nach einem der vorhergehenden Ansprüche,
- bei der der Träger (200) mehrteilig ausgebildet ist und mehrere voneinander beabstandete Trägerelemente aufweist.

4. Erdkollektorvorrichtung (1) nach Anspruch 3,
- bei der zumindest ein Teil der Trägerelemente als Gleichteile ausgebildet sind.

5. Erdkollektorvorrichtung (1) nach einem der vorhergehenden Ansprüche,
- bei der der Träger (200) Befestigungselemente (220) aufweist, die zum Klemmen des Rohres (100) auf einer Platte (210) des Trägers (200) befestigt sind.

6. Erdkollektorvorrichtung (1) nach einem der vorhergehenden Ansprüche,
- bei der der Träger (200) zwei Platten (260', 260") aufweist, wobei zwischen den zwei Platten (260', 260") das Rohr (100) durch die Klemmung fixiert ist.

7. Erdkollektorvorrichtung (1) nach einem der vorhergehenden Ansprüche,
- bei der der Träger (200) überwiegend aus Holz ausgebildet ist, wobei vorzugsweise die Nuten (225, 265, 265', 265") in das Holz des Trägers (200) gefräst sind.

8. Erdkollektorvorrichtung (1) nach einem der vorhergehenden Ansprüche,
- bei der der Träger (200) überwiegend, insbesondere vollständig im Erdreich auflösbares Material, insbesondere Holz aufweist.

9. Verfahren zur Herstellung einer Erdkollektorvorrichtung (1),
- bei dem eine Platte (210, 260') eines Trägers (200) in einer Montagevorrichtung (300) eingebracht wird,
- bei dem ein flexibles Rohr (100) entlang eines Weges (310) auf der Montagevorrichtung (300) positioniert wird,
- bei dem mittels Befestigungselementen (220) oder einer weiteren Platte (260") das Rohr (100) derart geklemmt wird, dass das Rohr (100) in Befestigungsstellen in axialer Richtung (Ra) durch Kraftschluss fixiert ist, und
- bei dem die Erdkollektorvorrichtung (1) der Montagevorrichtung (300) für eine Errichtung im Erdreich entnommen wird.

10. Montagevorrichtung (300) zur Herstellung einer Erdkollektorvorrichtung (1),
- mit einer Grundplatte (390), die Ausnehmungen (320) für eine Aufnahme von Platten (210, 211, 260') eines Trägers (200) der Erdkollektorvorrichtung (1) aufweist, und
- mit einer Anzahl von Positionierelementen (350), die zur Festlegung eines Verlegungsweges (310) für ein Rohr (100) der Erdkollektorvorrichtung (1) auf der Grundplatte (390) positioniert und befestigt, oder mit der Grundplatte einstückig ausgeformt sind.
